Europäisches Patentamt

European Patent Office

Office européen des brevets

(19)

(11) Veröffentlichungsnummer: **0 113 002**
**B1**

(12) # EUROPÄISCHE PATENTSCHRIFT

(45) Veröffentlichungstag der Patentschrift:
**25.06.86**

(51) Int. Cl.⁴: **C 09 D 11/10**, C 08 G 69/34

(21) Anmeldenummer: **83111176.0**

(22) Anmeldetag: **09.11.83**

(54) **Alkohollösliche Druckfarben.**

(30) Priorität: **26.11.82 DE 3243794**

(43) Veröffentlichungstag der Anmeldung:
**11.07.84 Patentblatt 84/28**

(45) Bekanntmachung des Hinweises auf die Patenterteilung:
**25.06.86 Patentblatt 86/26**

(84) Benannte Vertragsstaaten:
**AT BE CH DE FR GB IT LI LU NL SE**

(56) Entgegenhaltungen:
**FR - A - 2 071 645**
**US - A - 3 700 618**

(73) Patentinhaber: **SCHERING AKTIENGESELLSCHAFT**
**Berlin und Bergkamen, Waldstrasse 14 Postfach 15 40,**
**D-4709 Bergkamen (DE)**

(72) Erfinder: **Drawert, Manfred, Dr. Dipl.-Chem., Alte**
**Kreisstrasse 13, D-5758 Fröndenberg-Strickherdicke**
**(DE)**
Erfinder: **Krase, Horst, Unterster Kamp 14,**
**D-4700 Hamm 1 (DE)**

## Beschreibung

Die Erfindung betrifft die Verwendung von bei Raumtemperatur alkohollöslichen Polyamiden auf Basis polymerisierter Fettsäuren, mindestens einer unverzweigten und einer verzweigten Monocarbonsäure, Äthylendiamin und Hexamethylendiamin (HDA) als Druckfarbenbindemittel bei der Herstellung von Druckfarben.

Bei der Herstellung von Druckfarben werden von der Druckfarbenindustrie neben der erforderlichen guten Löslichkeit bei Raumtemperatur in Alkoholen wie Propanol, Butanol und insbesondere Äthanol auch eine gute Äthanolverdünnbarkeit sowie eine gute Wasserbeständigkeit des aufgetrockneten Druckfilms in steigendem Masse gefordert.

Die gute Löslichkeit bei Raumtemperatur ist erforderlich, damit nach einem Stillstand der auf die Druckwalze aufgetrocknete Film bei der Fortführung des Druckvorganges sofort wieder aufgelöst wird. Löst sich der aufgetrocknete Film nicht oder nicht unmittelbar, entstehen fehlerhafte und damit unbrauchbare Druckbilder.

Die gute Verdünnbarkeit — insbesondere Äthanolverdünnbarkeit — ist erforderlich, damit das Harz auch bei grossen momentanen Konzentrationsänderungen nicht ausfällt, sondern in Lösung bleibt. Grosse örtliche Konzentrationsänderungen entstehen, wenn es erforderlich ist, durch Verdunstungsverluste eingedickte Drucktinte durch Zugabe reinen Lösungsmittels wieder auf die erforderliche Viskosität einzustellen. Die dabei auftretenden geringen Harzkonzentrationen können zu einer Ausfällung des Harzes bzw. zu einer Trübung der Lösung führen, welche in diesem Zustand keine glänzenden Druckbilder mehr ergibt, d.h. es entstehen ebenfalls fehlerhafte und damit unbrauchbare Drucke.

Eine gute Wasserbeständigkeit der Druckfarben wird überall dort gefordert, wo die bedruckten Güter bei Lagerung oder Gebrauch erhöhten Feuchtigkeitskonzentrationen ausgesetzt sind, wie beispielsweise bei der Tiefkühllagerung von verpackten Lebensmitteln, Tragetaschen usw.

Die Verwendung von alkohollöslichen Polyamiden auf Basis von dimerisierten Fettsäuren zur Herstellung von Druckfarben ist zwar bereits bekannt, jedoch weisen diese Produkte noch Mängel auf.

Gemäss DE-PS 1 520 940 werden Polyamide auf Basis dimerisierter Fettsäuren, einer unverzweigten aliphatischen Monocarbonsäure mit 1 bis 5 Kohlenstoffatomen, Äthylendiamin und einem unverzweigten Co-Diamin mit 4 - 10 Kohlenstoffatomen als Druckfarbenbindemittel verwendet. Diese Polyamide sind zwar äthanollöslich und zeigen eine gute Wasserbeständigkeit, weisen aber keine ausreichende Äthanolverdünnbarkeit und keine befriedigende Gelierungsbeständigkeit der Lösungen bei insbesondere unter Raumtemperatur liegenden Temperaturen auf.

Gemäss DE-PS 1 645 408 werden Polyamide auf Basis dimerisierter Fettsäuren, einer unverzweigten aliphatischen Monocarbonsäure mit 1 - 5 Kohlenstoffatomen, Äthylendiamin und aromatischen oder cycloaliphatischen Co-Diaminen als Druckfarbenbindemittel verwendet. Diese Produkte sind zwar äthanollöslich und zeigen eine gute Äthanolverdünnbarkeit, weisen jedoch eine schlechte Wasserbeständigkeit und keine befriedigende Gelierungsbeständigkeit der Lösungen auf.

In der US-PS 3 412 115 werden Polyamide auf Basis dimerer Fettsäure, einem Alkylendiamin mit 2 - 3 Kohlenstoffatomen und Hexamonocarbonsäuren und gegebenenfalls weitere Monocarbonsäuren sowie deren Verwendung als Druckfarbenbindemittel beschrieben. Diese Produkte weisen jedoch eine unbefriedigende Haftung an dem bedruckten Gut auf und zeigen eine schlechte Äthanolverdünnbarkeit und keine ausreichende Gelierungsbeständigkeit der Lösungen bei insbesondere unter Raumtemperatur liegenden Temperaturen.

Der Erfindung liegt die Aufgabe zugrunde, diese Nachteile zu überwinden und Polyamide für die Verwendung als Druckfarbenbindemittel zu finden, welche neben einer guten Alkohollöslichkeit bei Raumtemperatur gleichzeitig eine grosse Äthanolverdünnbarkeit, eine gute Gelierungsbeständigkeit der Lösungen bei insbesondere unter Raumtemperatur liegenden Temperaturen, möglichst hohe Blockpunkte der Druckfilme sowie eine gute Wasserbeständigkeit aufweisen.

Diese Aufgabe wird erfindungsgemäss gelöst durch die Verwendung von bei Raumtemperatur alkohollöslichen, insbesondere äthanollöslichen Polyamiden, hergestellt durch Kondensation von

A)    dimerisierten Fettsäuren mit 16 - 44 Kohlenstoffatomen mit

B 1)  mindestens einer aliphatischen unverzweigten Monocarbonsäure mit 3 - 6 Kohlenstoffatomen und

2)  mindestens einer aliphatischen verzweigten Monocarbonsäure mit 4 - 9 Kohlenstoffatomen

wobei das Äquivalenzverhältnis der Komponenten A und B im Bereich von 0,73 : 0,27 bis 0,6 : 0,4, insbesondere 0,7 : 0,3, variiert und jede der Komponenten B 1) und B 2) in Mengen von mindestens 0,1 Äquivalenten, bezogen auf Gesamtsäureäquivalente, vorliegt und

C)    Äthylendiamin und

D)    Hexamethylendiamin

wobei das Äquivalenzverhältnis der Komponenten C) zu D) im Bereich von 0,7 : 0,3 bis 0,4 : 0,6 liegt und gegebenenfalls

E)    anorganische und/oder organische Pigmente und/oder lösliche Farbstoffe, Wachse, Gleitmittel, Antioxydantien, Nitrocellulose, Verschnittharze

als Druckfarbenbindemittel zur Herstellung von Druckfarben.

Die erfindungsgemäss mitverwendeten dimerisierten Fettsäuren gemäss Komponente A) sind die im Handel befindlichen technischen polymerisierten Fettsäuren. Der Ausdruck dimerisierte Fettsäure bezieht sich in allgemeiner Form auf polymerisierte Säuren, die aus «Fettsäuren» erhalten werden. Der Ausdruck «Fettsäure» umfasst ungesättigte natürliche und synthetische einbasische aliphatische Säuren mit 12 - 22 Kohlenstoffatomen, bevorzugt 18 Kohlenstoffatomen. Diese Fettsäuren lassen sich nach bekannten Verfahren polymerisierten (vgl. DE-OS 1 443 938, DE-OS 1 443 968, DE-PS 2 118 702 und DE-PS 1 280 852).

Typische im Handel erhältliche polymere Fettsäuren haben etwa folgende Zusammensetzung:

monomere Säuren (Mo)     5 -15 Gewichtsprozent
dimere Säuren (Di)     60 - 80 Gewichtsprozent
trimere Säuren (Tri)     10 - 35 Gewichtsprozent

Der Gehalt an dimerer Säure kann durch allgemein bekannte Destillationsverfahren zu 100 Gewichtsprozent erhöht werden.

Die erfindungsgemäss mitverwendete Monocarbonsäuremischung gemäss B) besteht aus

1) mindestens einer aliphatischen unverzweigten Monocarbonsäure mit einer Kettenlänge von 3 - 6 Kohlenstoffatomen wie Propionsäure, n-Valerionsäure, n-Capronsäure und insbesondere Buttersäure und

2) mindestens einer aliphatischen verzweigten Monocarbonsäure mit 4 - 9 Kohlenstoffatomen wie iso-Buttersäuren, iso-Capronsäure, iso-Heptansäuren, iso-Octansäuren, iso-Nonansäuren und insbesondere 3-Methylbuttersäure und 2-Äthylhexansäure.

Erfindungsgemäss bevorzugt wird die Kombination aus jeweils einer der unter B1) und B2) genannten Säuren.

Das Verhältnis der polymerisierten Fettsäure gemäss A) zu der Kombination der monomeren Fettsäuren gemäss B) liegt zwischen 0,73 : 0,27 bis 0,6 : 0,4 Äquivalenten, insbesondere bei 0,7 : 0,3, bezogen auf Gesamtsäureäquivalent. Der Anteil der Monocarbonsäurekombination gemäss B1) und B2) von 0,27 bis 0,4 Äquivalenten, bezogen auf Gesamtsäureäquivalente, kann in wechselnden Mengen zwischen den Komponenten B1) und B2) aufgeteilt sein, wobei jedoch jede der Komponenten B1) und B2) in Mengen von mindestens 0,1 Äquivalenten, bezogen auf Gesamtsäureäquivalent, vorliegen muss.

Zur Modifizierung der Eigenschaften der Endprodukte können neben den erfindungsgemässen Komponenten A bis D auch geringe Mengen anderer reaktiver Komponenten, wie insbesondere längerkettige Diamine, mitverwendet werden, wobei die Mengen jeweils so zu wählen sind, dass weder die Alkohollöslichkeit, die Verdünnbarkeit, Gelierungs- und Wasserbeständigkeit sowie der Blockpunkt der Polyamide unter das von der Praxis geforderte Muss gesenkt werden.

Die Säurekomponenten A) und B) und die Aminkomponenten C) und D) liegen in im wesentlichen äquivalenten Mengen vor. Zur Modifizierung der Eigenschaften sind geringfügige Abweichungen zur einen oder anderen Seite möglich.

Als Lösungsmittel für die Herstellung der Druckfarben kommen die auf dem vorliegenden Gebiet üblichen kurzkettigen aliphatischen Alkohole mit 2 - 4 Kohlenstoffatomen, wie n-Propanol-, iso-Propanol, Butanol, iso-Butanol und insbesondere Äthanol sowie zur Modifizierung die auf diesem Gebiet üblichen Ester und Ketone in Betracht.

Die Druckfarbenlösungen werden mit Äthanol auf einen üblichen Gehalt von ca. 20 - 50% Feststoff, vorzugsweise 25 - 35%, eingesetzt, entsprechend einer Auslaufzeit von 18 - 15 Sekunden, gemessen im DIN 4 mm-Becher nach DIN 53 211.

Neben dem Druckfarbenbindemittel können die auf diesem Gebiet üblichen anorganischen und/oder organischen Pigmente bzw. löslichen Farbstoffe, Wachse, Gleitmittel, Antioxidantien, Nitrocellulose, Verschnittharze usw. mitverwendet werden. Kombinationsmöglichkeiten der verschiedenen Zusatzstoffe in Art und Mengen gehören zum allgemeinen Fachwissen der Druckfarbenhersteller.

Die erfindungsgemäss verwendeten Druckfarben werden auf dem Drucksektor insbesondere für den Tief- oder Flexodruck verwendet.

*Beispiel 1*

600 g Dimere Fettsäure (D 75) werden mit 44,55 g Propionsäure und 30,7 g iso-Valeriansäure (Äquivalenzverhältnis von 0,7 : 0,2 : 0,1) in einen mit Rührer, Thermometer und Kühler versehenen Dreihalskolben gegeben. Der Kolben wird dreimal evakuiert und mit Stickstoff belüftet. Dann werden 52,06 g Äthylendiamin (EDA) und 125,9 h Hexamethylendiamin (HDA als 60%ige wässrige Lösung) zugegeben und die Komponenten in einer Stickstoffatmosphäre unter Rühren innerhalb von 2 h auf 240°C erhitzt. Die Temperatur von 240°C wird 4 h gehalten. Nach 2 h wurde zusätzlich ein Vakuum von ca. 20 Torr angelegt. Das Produkt wies eine Säurezahl von ca. 2 und eine Aminzahl von ca. 1,5 auf und hatte einen Erweichungspunkt von R + B 114°C. Die in der Tabelle 1 angegebenen Beispiele wurden analog Beispiel 1 hergestellt.

Tabelle 1

| Beispiel | dimere Fettsäure | Kettenabbrecher | |
| | | I | II |
|---|---|---|---|
| 1 | 600,00 g D 75 | 44,55 g Propionsäure | 30,70 g i-Valeriansäure |
| 2 | 600,00 g D 75 | 33,55 g » | 43,30 g Äthylhexansäure |
| 3 | 308,00 g D 75 | 17,20 g » | 33,30 g » |
| 4 | 300,00 g D 75 | 22,28 g » | 24,26 g Isononansäure |
| 5 | 600,00 g D 75 | 53,02 g Buttersäure | 26,51 g i-Buttersäure |
| 6 | 600,00 g D 75 | 53,02 g » | 30,70 g i-Valeriansäure |
| 7 | 825,00 g D 75 | 72,90 g » | 59,55 g Äthylhexansäure |

## Tabelle 1 (Fortsetzung)

| | | Kettenabbrecher | |
|---|---|---|---|
| Beispiel | dimere Fettsäure | I | II |
| 8 | 320,00 g D 75 | 28,27 g Buttersäure | 27,46 g Isononansäure |
| 9 | 320,00 g D 75 | 14,14 g   » | 45,94 g Äthylhexansäure |
| 10 | 320,00 g D 75 | 28,27 g   » | 16,62 g i-Valeriansäure |
| 11 | 340,00 g D 75 | 35,28 g n-Valeriansäure | 15,02 g i-Buttersäure |
| 12 | 300,00 g D 75 | 28,55 g Buttersäure | 25,16 g i-Valeriansäure |
| 13 | 340,00 g D 75 | 26,29 g   » | 28,36 g Isononansäure |
| 14 | 300,00 g D 75 | 50,98 g Capronsäure | 37,88 g Äthylhexansäure |
| 15 | 360,00 g D 75 | 31,80 g Buttersäure | { 9,21 g i-Valeriansäure<br>13,00 g Äthylhexansäure |
| 16 | 360,00 g D 75 | 31,80 g   » | 18,42 g i-Valeriansäure |

| Beispiel | Äquivalenz-verhältnis | EDA | 60%ige wässrige Lösung | Äquivalenz-verhältnis | R + B °C |
|---|---|---|---|---|---|
| 1 | 0,7 : 0,2 : 0,1 | 52,06 g | 125,90 g | 0,575 : 0,425 | 114 |
| 2 | 0,7 : 0,2 : 0,1 | 45,27 g | 148,10 g | 0,5   : 0,5 | 87 |
| 3 | 0,7 : 0,15 : 0,15 | 26,72 g | 64,62 g | 0,575 : 0,425 | 91 |
| 4 | 0,7 : 0,2 : 0,1 | 22,64 g | 74,06 g | 0,5   : 0,5 | 94 |
| 5 | 0,7 : 0,2 : 0,1 | 52,06 g | 125,90 g | 0,575 : 0,425 | 113 |
| 6 | 0,7 : 0,2 : 0,1 | 52,06 g | 125,90 g | 0,575 : 0,425 | 114 |
| 7 | 0,7 : 0,2 : 0,1 | 74,75 g | 177,50 g | 0,575 : 0,425 | 100 |
| 8 | 0,7 : 0,2 : 0,1 | 24,87 g | 81,08 g | 0,5   : 0,5 | 96 |
| 9 | 0,7 : 0,2 : 0,1 | 27,36 g | 72,98 g | 0,55  : 0,45 | 72 |
| 10 | 0,7 : 0,2 : 0,1 | 19,90 g | 97,30 g | 0,4   : 0,6 | 102 |
| 11 | 0,7 : 0,2 : 0,1 | 30,39 g | 73,22 g | 0,575 : 0,425 | 109 |
| 12 | 0,65 : 0,20 : 0,15 | 28,87 g | 69,58 g | 0,575 : 0,425 | 111 |
| 13 | 0,72 : 0,18 : 0,10 | 29,54 g | 71,19 g | 0,575 : 0,425 | 98 |
| 14 | 0,60 : 0,25 : 0,15 | 26,41 g | 86,11 g | 0,5   : 0,5 | 95 |
| 15 | 0,70 : 0,20 : 0,05 : 0,05 | 27,70 g | 90,77 g | 0,5   : 0,5 | 98 |
| 16 | 0,70 : 0,20 : 0,10 | 27,70 g | 72,62 g<br>18,51 g<br>1,12-Diamino-<br>-dodecan | 0,5   : 0,4 : 0,1 | 100 |

### *Vergleichsbeispiele*

| | | Kettenabbrecher | |
|---|---|---|---|
| Beispiel 1 | dimere Fettsäure | I | II |
| 1 | 360,00 g D 75 | 26,70 g Propionsäure | — |
| 2 | 360,00 g D 75 | 32,51 g Essigsäure | — |
| 3 | 360,00 g D 75 | 21,67 g   » | 25,98 g Äthylhexansäure |
| 4 * | — | — | — |

| Beispiel 1 | Äquivalenz-verhältnis | EDA | 60%ig HDA | Äquivalenz-verhältnis | R + B °C |
|---|---|---|---|---|---|
| 1 | 0,778 : 0,222 | 28,10 g | 67,33 g HDA | 0,575 : 0,425 | 117 |
| 2 | 0,7   : 0,3 | 40,74 g | 38,09 g IPD | 0,75  : 0,25 | 119 |
| 3 | 0,7 : 0,2 : 0,1 | 43,46 g | 13,38 g PrDA$_{1,3}$ | 0,8   : 0,2 | 88 |
| 4 * | — | — | — | — | 97 |

HDA = 1,6-Diaminohexan      PrDA$_{1,3}$ = 1,3-Diaminopropan      EDA = 1,2-Diaminoäthan
IPD  = 1-Amino-3-aminomethyl-3,5,5-trimethyl-cyclohexan
R + B = Erweichungspunkt nach der Ring- und Kugel-Methode
D 75 = dimerisierte Fettsäure mit einem Dimergehalt von 75%
\*      = handelsübliches Produkt auf Basis Dimerer Fettsäure, Aminen und Kettenabbrecher, dessen genaue Zusammensetzung nicht bekannt ist

Tabelle 2

| Beispiel | 1 | 2 | 3 | 4 | 5 | 6 | 7 | 8 | 9 | 10 | 11 | 12 | .13 | 14 | 15 | 16 |
|---|---|---|---|---|---|---|---|---|---|---|---|---|---|---|---|---|
| Äthanolver-dünnbarkeit % Harz | < 1,0 | < 1,0 | < 1,0 | < 1,0 | < 1,0 | < 1,0 | < 2,0 | < 1,0 | < 1,0 | < 1,0 | < 1,0 | < 1,0 | < 1,0 | < 1,0 | < 1,4 | < 1,4 |

| Vergleichs-beispiele aus Tab. 1 | 1 | 2 | 3 | 4 |
|---|---|---|---|---|
| Äthanolver-dünnbarkeit % Harz | 8,9 | < 1,0 | 5,6 | < 1,5 |

Sämtliche der in der Tabelle 1 aufgeführten erfindungsgemässen Polyamidharze wurden anschliessend, wie nachfolgend beschrieben, behandelt und geprüft.

*Prüfung der Äthanolverdünnbarkeit*

3 g Polyamidharz werden in einem 500 ml Erlenmeyerkolben eingewogen und in 7 g Äthanol unter Rühren gelöst. Dann wird aus einer Bürette solange reiner Äthylalkohol zugegeben, bis die zunächst klare Lösung erste Trübungserscheinungen aufweist.

Die Äthanolverdünnbarkeit wird angegeben in % Polyamidharz, das in der verdünnten, gerade noch klaren Lösung dann enthalten ist (s. Tabelle 2).

*Herstellung der Druckfarben und Druckfilme*

Die Polyamidharze werden unter Mitverwendung der aufgeführten Verschnittmittel in den genannten Lösungsmitteln bzw. Lösungsmittelgemischen gelöst. Dann wird die Lösung in den Mahlbecher einer Kugelmühle gegeben und mit den aufgeführten Pigmenten versehen. Nach 20 min Dispergierzeit wird die Farbe entnommen. Werden lösliche Farbstoffe eingesetzt, entfällt dieser Anreibeprozess. Anschliessend werden die entsprechenden Zusatzmittel hinzugefügt. Die so erhaltenen Stammfarben (s. Tab. 3) werden vor dem Druck mit Äthanol auf eine Auslaufzeit von 20 - 22 sec (DIN 4 Becher) verdünnt.

Die so erhaltenen fertigen Druckfarben werden anschliessend mit einer handelsüblichen Labordruckmaschine von Rolle auf Rolle sowohl auf Polyäthylen- als auch auf unlackierte Zellglasfolie gedrückt. Nach 2 Tagen Lagerzeit bei Raumtemperatur werden die Drucke den nachfolgend beschrieben Tests unterworfen.

*Prüfung der Druckfilme*

a) «Crinkle»-Test

Dieser Test sieht vor, die erhaltenen, gelagerten Druckfilme auf Polyäthylen 24 Std. in Wasser von 20 bis 23 °C zu tauchen und dann sofort nach der Herausnahme aus dem Medium Druckbild gegen Druckbild mit den Handballen unter Andruck gegeneinander zu scheuern und zu knittern.

*Beurteilung:*

1. Druckfilm bleibt vollkommen erhalten
2. Druckfilm weist Risse auf
3. Druckfilm zeigt flächig abgelöste Stellen
4. Druckfilm ist praktisch zerstört
5. Druckfilm zeigt bereits ohne Scheuern flächige Ablösungen

(s. Tabelle 3).

b) Blockpunkt

Abschnitte der gelagerten, auf unlackiertes Zellglas aufgetragenen Drucke werden gegeneinandergefaltet und zwischen plan geschliffene Glasplatten gelegt. Diese werden dann unter einer Belastung von 60 g/cm² bei täglich um 10 °C erhöhten Temperaturen in einem Trockenschrank gelagert.

Beurteilungskriterium ist die Temperatur, bei der die Filme nach dem Auseinanderfalten erste ganz leichte Beschädigungen aufweisen.

(s. Tabelle 3).

Tabelle 3

| Beispiel aus Tab. 1 | Gew.-Teile | Verschnitt-mittel | Gew.-Teile | Lösungs-mittel | Gew.-Teile | Pigmente Farbstoffe | Gew.-Teile | Zusatz-mittel | Gew.-Teile | Crinkle Test | Block-punkt °C |
|---|---|---|---|---|---|---|---|---|---|---|---|
| 1 | 30 | — | — | Äthanol | 70 | Lithol-[1] schar-lack 3700 | 10 | — | — | 1 -2 | 65 · |
| 2 | 30 | — | — | Äthanol | 70 | » [1] | 10 | — | — | 1 | 60 |
| 3 | 30 | — | — | Äthanol | 70 | » [1] | 10 | — | — | 2 | 50 |
| 4 | 30 | — | — | Äthanol | 70 | » [1] | 10 | — | — | 2 | 50 |
| 5 | 30 | — | — | Äthanol | 70 | » [1] | 10 | — | — | 2 | 65 |
| 6 | 30 | — | — | Äthanol | 70 | » [1] | 10 | — | — | 1 - 2 | 75 |
| 7 | 30 | — | — | Äthanol | 70 | » [1] | 10 | — | — | 2 | 55 |
| 8 | 30 | — | — | Äthanol | 70 | » [1] | 10 | — | — | 1 - 2 | 55 |
| 9 | 30 | — | — | Äthanol | 70 | » [1] | 10 | — | — | 1 - 2 | 50 |

Tabelle 3  (Fortsetzung)

| Beispiel aus Tab. 1 | Gew.-Teile | Verschnitt-mittel | Gew.-Teile | Lösungs-mittel | Gew.-Teile | Pigmente Farbstoffe | Gew.-Teile | Zusatz-mittel | Gew.-Teile | Crinkle Test | Block-punkt °C |
|---|---|---|---|---|---|---|---|---|---|---|---|
| 10 | 30 | — | — | Äthanol | 70 | Lithol-[1] schar-lack 3700 | 10 | — | — | 1 -2 | 60 |
| 11 | 30 | — | — | Äthanol | 70 | » [1] | 10 | — | — | 1 - 2 | 55 |
| 12 | 30 | — | — | Äthanol | 70 | » [1] | 10 | — | — | 2 | 60 |
| 13 | 30 | — | — | Äthanol | 70 | » [1] | 10 | — | — | 1 - 2 | 55 |
| 14 | 30 | — | — | Äthanol | 70 | » [1] | 10 | — | — | 2 | 55 |
| 15 | 30 | — | — | Äthanol | 70 | » [1] | 10 | — | — | 1 - 2 | 60 |
| 16 | 30 | — | — | Äthanol | 70 | » [1] | 10 | — | — | 2 | 60 |
| 1 | 20 | — | — | Äthanol/ n-Propanol = 4 : 1 | 80 | $TiO_2$ RN63 [3] | 30 | — | — | 1 - 2 | 65 |
| 1 | 20 | Nitrocellu-lose A 400 [5] | 10 | Äthanol/ Alkylacetat/ n-Propanol = 2 : 2 : 1 | 70 | Heliogen blau D 7080 [2] | 10 | Lubo-print B10 [7] | 1,5 | 1 - 2 | 90 |
| 11 | 20 | » [5] | 10 | » | 70 | Orasol = orange GRW [4] | 8 | — | — | 2 | 85 |
| 3 | 20 | » [5] | 10 | Äthanol/ Äthylacetat/ Äthylglykol = 10 : 9 : 1 | 70 | Lithol-[1] schar-lack 3700 | 10 | Kema-mide E [8] | 2,0 | 1 - 2 | 80 |
| 6 | 20 | Nitrocellu-lose A 400 [5] | 10 | Isopropa-nol/Äthyl-glykol = 10 : 9 : 1 | 70 | » [1] | 10 | » | 2,0 | 1 - 2 | 85 |
| 15 | 20 | Nitrocellu-lose A 400[5] : Kunstharz SK [6] = 2 : 1 | 10 | Äthanol/ Isopropyl-acetat/n-Propanol = 2 : 2 : 1 | 70 | » [1] | 10 | » Lubo-print B10 [7] = 1 : 1 | 2,0 | 1 - 2 | 70 |
| 3 | 20 | Nitrocellu-lose E 600 [5] | 10 | n-Butanol/ Äthylacetat/ Aceton = 3 : 6 : 1 | 70 | » [1] | 10 | Kema-mide E [8] | 1,5 | 2 | 80 |
| 6 | 20 | » | 10 | Äthanol/ Isopropyl-acetat/Äthyl-glykol = 10 : 9 : 1 | 70 | » [1] | 10 | Jonol [9] | 0,5 | 1 - 2 | 80 |
| 11 | 20 | » | 10 | Isopropa-nol/n-Propyl-acetat/Alkyl-glykol = 10 : 9 : 1 | 70 | $TiO_2$ RN 63 [3] | 45 | Kema-mide E [8] | 2,0 | 1 - 2 | 95 |

| Vergleichs-beispiele aus Tab. 1 | Gew.-Teile | Verschnitt-mittel | Gew.-Teile | Lösungs-mittel | Gew.-Teile | Pigmente Farbstoffe | Gew.-Teile | Zusatz-mittel | Gew.-Teile | Crinkle Test | Block-punkt °C |
|---|---|---|---|---|---|---|---|---|---|---|---|
| 1 | 30 | — | — | Äthanol | 70 | Lithol-[1] schar-lack 3700 | 10 | — | — | 2 - 3 | 70 |
| 2 | 30 | — | — | Äthanol | 70 | » [1] | 10 | — | — | 4 - 5 | 65 |
| 3 | 30 | — | — | Äthanol | 70 | » [1] | 10 | — | — | 4 - 5 | 60 |
| 4 | 30 | — | — | Äthanol | 70 | » [1] | 10 | — | — | 3 | 50 |

*Legende zu Tabelle 3*

| | | |
|---|---|---|
| [1] = Organisches Rotpigment | Fa. BASF | |
| [2] = Organisches Blaupigment | Fa. BASF | |
| [3] = Anorganisches Weisspigment | Fa. Kronos Titan | |
| [4] = Löslicher Farbstoff | Fa. CIBA | |
| [5] = Nitrocellulose, alkohol- bzw. esterlösl. | Fa. Wolff-Walsrode | |
| [6] = Ketonharz | Fa. Hüls | |
| [7] = Wachsdispersion | Fa. Bader | |
| [8] = Gleitmittel | Fa. Humko Products | |
| [9] = Stabilisator | Fa. Shell | |

## Patentansprüche

1. Verwendung von bei Raumtemperatur alkohollöslichen Polyamiden, hergestellt durch Kondensation von

A) dimerisierten Fettsäuren mit 16 - 44 Kohlenstoffatomen mit

B 1) mindestens einer aliphatischen unverzweigten Monocarbonsäure mit 3 - 6 Kohlenstoffatomen und

2) mindestens einer aliphatischen verzweigten Monocarbonsäure mit 4 - 9 Kohlenstoffatomen

wobei das Äquivalenzverhältnis der Komponenten A und B im Bereich von 0,73 : 0,27 bis 0,6 : 0,4, variiert und jede der Komponenten B 1) und B 2) in Mengen von mindestens 0,1 Äquivalenten, bezogen auf Gesamtsäureäquivalente, vorliegt und

C) Äthylendiamin und

D) Hexamethylendiamin

wobei das Äquivalenzverhältnis der Komponenten C) zu D) im Bereich von 0,7 : 0,3 bis 0,4 : 0,6 liegt und gegebenenfalls

E) anorganische und/oder organische Pigmente und/oder lösliche Farbstoffe, Wachse, Gleitmittel, Antioxydantien, Nitrocellulose, Verschnittharze,

als Druckfarbenbindemittel zur Herstellung von Druckfarben.

2. Verwendung von bei Raumtemperatur alkohollöslichen Polyamiden gemäss dem Anspruch 1, dadurch gekennzeichnet, dass das Äquivalenzverhältnis der Komponenten A : B = 0,7 : 0,3 ist.

3. Verwendung von bei Raumtemperatur alkohollöslichen Polyamiden gemäss den Ansprüchen 1 bis 2, dadurch gekennzeichnet, dass als Monocarbonsäuren gemäss B 1) Propionsäure und/oder n-Valeriansäure und/oder n-Capronsäure verwendet wird.

4. Verwendung von bei Raumtemperatur alkohollöslichen Polyamiden gemäss den Ansprüchen 1 bis 2, dadurch gekennzeichnet, dass als Monocarbonsäuren gemäss B 1) Buttersäure verwendet wird.

5. Verwendung von bei Raumtemperatur alkohollöslichen Polyamiden gemäss den Ansprüchen 1 bis 4, dadurch gekennzeichnet, dass als Monocarbonsäure gemäss B 2) 3-Methylbuttersäure und/oder 2-Äthylhexansäure verwendet wird.

6. Verwendung von bei Raumtemperatur alkohollöslichen Polyamiden gemäss den Ansprüchen 1 bis 5, dadurch gekennzeichnet, dass jede der Komponenten B 1) und B 2) in Mengen von mindestens 0,1 Äquivalenten, bezogen auf Gesamtsäureäquivalente, vorliegt.

7. Verwendung von bei Raumtemperatur alkohollöslichen Polyamiden gemäss den Ansprüchen 1 bis 6, dadurch gekennzeichnet, dass anorganische und/oder organische Pigmente, lösliche Farbstoffe, Verschnittharze mitverwendet werden.

8. Verwendung von bei Raumtemperatur alkohollöslichen Polyamiden gemäss den Ansprüchen 1 bis 7 als Lösungen in aliphatischen Alkoholen mit 2 - 4 Kohlenstoffatomen mit einem Feststoffgehalt von ca. 20 - 50% entsprechend einer Auslaufzeit von 15 bis 30 Sekunden, für den Tief- oder Flexodruck.

9. Verwendung von bei Raumtemperatur alkohollöslichen Polyamiden gemäss den Ansprüchen 1 bis 8 in Äthanol mit einem Feststoffgehalt von 25 bis 35% entsprechend einer Auslaufzeit von 18 - 25 Sekunden für den Tief- oder Flexodruck.

## Claims

1. Use of polyamides soluble in alcohol at room temperature, produced by condensation of

A) dimerised fatty acids with 16 - 44 carbon atoms with

B 1) at least one aliphatic unbranched monocarboxylic acid with 3 - 6 carbon atoms and

2) at least one aliphatic branched monocarboxylic acid with 4 - 9 carbon atoms

. in which the equivalence ratio of the components A and B varies in the range of 0.73 : 0.27 to 0.6 : 0.4 and each of the components B 1) and B 2) is present in an amount of at least 0.1 equivalents, expressed as total acid equivalent, and

C) ethylenediamine and

D) hexamethylenediamine

in which the equivalence ratio of the components C) to D) lies in the range of 0.7 : 0.3 to 0.4 : 0.6 and optionally

E) inorganic and/or organic pigments and/or soluble dyes, waxes, slip agents, antioxidants, nitrocellulose, blending resins,

as binders for printing inks.

2. Use of polyamides soluble in alcohol at room temperature according to claim 1, characterised in that the equivalence ratio of the components A : B is 0.7 : 0.3.

3. Use of polyamides soluble in alcohol at room temperature according to claims 1 to 2, characterised in that as the monocarboxylic acid according to B 1) propionic acid and/or caproic acid is used.

4. Use of polyamides soluble in alcohol at room temperature according to claims 1 to 2, characterised in that as the monocarboxylic acid to B 1) butyric acid is used.

5. Use of polyamides soluble in alcohol at room temperature according to claims 1 to 4, characterised in that as the monocarboxylic acid according to B 2) 3-methylbutyric acid and/or 2-ethylhexanoic acid is used.

6. Use of polyamides soluble in alcohol at room temperature according to claims 1 to 5, characterised in that each of the components B 1) and B 2) is used in an amount of at least 0,1 equivalents, expressed as total acid equivalent.

7. Use of polyamides soluble in alcohol at room temperature according to claims 1 to 6, characterised in that inorganic and/or organic pigments, soluble dyes, resin chips are used therewith.

8. Use of polyamides soluble in alcohol at room temperature according to claims 1 to 7 as solutions in aliphatic alcohols with 2 - 4 carbon atoms with a fixing substance content of ca. 20 - 50% corresponding to a bleed time of 15 - 30 seconds for gravure or flexographic printing.

9. Use of polyamides soluble in alcohol at room temperature according to claims 1 to 8 in ethanol with a fixing substance content of 25 - 35% corresponding to a bleed time of 18 - 25 seconds for gravure or flexographic printing.

**Revendications**

1. Application de polyamides qui sont solubles dans les alcools à la température ambiante et qui ont été préparés par condensation:

A) d'acides gras dimérisés contenant de 16 à 44 atomes de carbone avec

B 1) au moins un acide monocarboxylique aliphatique non ramifié contenant de 3 à 6 atomes de carbone et

2) au moins un acide monocarboxylique aliphatique ramifié contenant de 4 à 9 atomes de carbone,

le rapport en équivalents des composantes A et B étant situé dans l'intervalle allant de 0,73 : 0,27 à 0,6 : 0,4, et chacune des composantes B 1) et B 2) étant présente en une quantité au moins égale à 0,1 équivalent, par rapport au nombre total d'équivalents d'acide, et

C) l'éthylène-diamine et

D) l'hexaméthylène-diamine,

le rapport en équivalents de la composante C) à la composante D) étant compris entre 0,7 : 0,3 et 0,4 : 0,6, et éventuellement

E) des pigments minéraux et/ou organiques et/ou des colorants solubles, des cires, des lubrifiants, des anti-oxydants, de la nitrocellulose et des résines de coupage,

comme liants pour la préparation d'encres d'imprimerie.

2. Application de polyamides solubles dans des alcools à la température ambiante, selon la revendication 1, application caractérisée en ce que le rapport, en équivalents, de la composante A à la composante B est égal à 0,7 : 0,3.

3. Application de polyamides solubles dans des alcools à la température ambiante, selon l'une des revendications 1 et 2, application caractérisée en ce qu'on utilise, comme acides monocarboxylique selon B 1), l'acide propionique et/ou l'acide n-valérique et/ou l'acide n-hexanoïque.

4. Application de polyamides solubles dans des alcools à la température ambiante, selon l'une des revendications 1 et 2, application caractérisée en ce qu'on utilise, comme acides monocarboxylique selon B 1), l'acide butyrique.

5. Application de polyamides solubles dans des alcools à la température ambiante, selon l'une quelconque des revendications 1 à 4, application caractérisée en ce qu'on utilise, comme acide monocarboxylique selon B 2), l'acide méthyl-3 butyrique et/ou l'acide éthyl-3 hexanoïque.

6. Application de polyamides solubles dans des alcools à la température ambiante, selon l'une quelconque des revendications 1 à 5, application caractérisée en ce que chacune des composantes B 1) et B 2) est présente en une quantité d'au moins 0,1 équivalent, par rapport au nombre total d'équivalents d'acide.

7. Application de polyamides solubles dans des alcools à la température ambiante, selon l'une quelconque des revendications 1 à 6, application caractérisée en ce qu'on utilise des pigments minéraux et/ou organiques, des colorants solubles et des résines de coupage.

8. Application de polyamides solubles dans des alcools à la température ambiante, selon l'une quelconque des revendications 1 à 7, sous la forme de solutions des alcools aliphatiques contenant de 2 à 4 atomes de carbone, solutions dont la teneur en matière solide est d'environ 20 à 50% en poids et correspond à un temps d'écoulement de 15 à 30 secondes, pour l'héliogravure ou la flexographie.

9. Application de polyamides solubles dans des alcools à la température ambiante, selon l'une quelconque des revendications 1 à 8, sous la forme de solutions dans de l'éthanol qui ont une teneur en matière solide de 25 à 35%, correspondant à un temps d'écoulement de 18 à 25 secondes, pour l'héliogravure ou la flexographie.